# EUROPEAN PATENT APPLICATION

(11) **EP 4 401 225 A1**
(43) Date of publication of application: **17.07.2024**
(21) Application number: 23759014.6
(22) Date of filing: 08.02.2023
(51) Int. Cl.: H01M 50/383

(54) **BATTERY CASING, BATTERY CELL, BATTERY, AND ELECTRICAL DEVICE**

(30) Priority: 22.02.2022 CN 202220361886 U
(71) Applicant: Contemporary Amperex Technology Co., Limited, Ningde, Fujian 352100 (CN)
(72) Inventor: CHEN, Xiaobo, Ningde, Fujian 352100 (CN); JIN, Qiu, Ningde, Fujian 352100 (CN); GU, Mingguang, Ningde, Fujian 352100 (CN)
(74) Representative: Ziebig Hengelhaupt Intellectual Property Attorneys Patentanwaltskanzlei PartGmbB
(86) International application number: PCT/CN2023/074956
(87) International publication number: WO 2023/160389

(57) **Abstract**

This application discloses a battery housing (1), a battery cell (3), a battery (100), and an electric device. The battery housing (1) includes a shell (11), where a bottom of the shell (11) has a protrusion corresponding region (111), and the protrusion corresponding region (111) is opposite a protrusion (41) of a bottom plate (4) of the battery (100); and an explosion-proof valve (12), where the explosion-proof valve (12) is disposed in a non-protrusion corresponding region (112) at the bottom of the shell (11).

## Description

### CROSS-REFERENCE TO RELATED APPLICATIONS

This application claims priority to Chinese Patent Application No. 202220361886.2, filed with the China National Intellectual Property Administration on February 22, 2022 and entitled "BATTERY HOUSING, BATTERY CELL, BATTERY, AND ELECTRIC DEVICE", which is incorporated herein by reference in its entirety.

### TECHNICAL FIELD

This application relates to the field of battery technologies, and more specifically, to a battery housing, a battery cell, a battery, and an electric device.

### BACKGROUND

A secondary battery is chargeable and dischargeable. When the secondary battery is in situations such as overcharging, penetration of electrode plate by a metal conductor, or hot box test, heat and gas rapidly accumulate inside the secondary battery. This leads to an increase in internal pressure of the secondary battery or even swelling and explosion of the secondary battery in severe cases.

When the secondary battery is used in passenger vehicles, its safety performance is crucial for the passengers' life safety. Therefore, how the safety performance of the secondary battery is enhanced is a problem to be resolved urgently.

### SUMMARY

An objective of the embodiments of this application is to provide a battery housing, a battery cell, a battery, and an electric device, so as to resolve the technical problem of poor safety of the battery in the related art.

To resolve the foregoing technical problem, the technical solutions used in the embodiments of this application are as follows:

According to a first aspect, this application provides a battery housing for battery cell. The battery housing includes a shell and an explosion-proof valve. A bottom of the shell has a protrusion corresponding region and non-protrusion corresponding regions, the protrusion corresponding region is opposite a protrusion of a bottom plate of a battery, and the non-protrusion corresponding regions and the protrusion of the bottom plate of the battery are staggered with each other. The explosion-proof valve is disposed in the non-protrusion corresponding region.

The battery housing provided in the embodiment of this application has the following beneficial effects: In the battery housing provided in the embodiment of this application, the bottom of the shell is provided with the protrusion corresponding region opposite the protrusion of the bottom plate of the battery, and the non-protrusion corresponding regions staggered with the protrusion of the bottom plate of the battery, and the explosion-proof valve is disposed in the non-protrusion corresponding region. Since the non-protrusion corresponding regions are staggered with the protrusion of the bottom plate of the battery, the explosion-proof valve does not correspond to the protrusion of the bottom plate of the battery, that is, the protrusion of the bottom plate of the battery does not obstruct the explosion-proof valve, so that the protrusion of the bottom plate of the battery does not affect normal gas discharge of the explosion-proof valve. When the cell undergoes thermal runaway and the pressure in the cell exceeds a specified value, the protrusion of the bottom plate of the battery does not affect the gas discharge of the explosion-proof valve due to the provision of the explosion-proof valve in the non-protrusion corresponding region. This avoids unsmooth gas discharge of the explosion-proof valve and allows the gas in the battery to be discharged, thus avoiding battery explosion, reducing safety hazard, and improving safety.

In some embodiments, the protrusion corresponding region is provided in a middle region of the bottom of the shell, and the non-protrusion corresponding regions are on two sides of the protrusion corresponding region.

With the foregoing technical solution, the protrusion is disposed in the middle region of the bottom plate of the battery, and correspondingly, the middle region of the shell is also the protrusion corresponding region. Therefore, the protrusion corresponding region of the shell corresponds to the protrusion of the bottom plate of the battery. All regions other than the protrusion corresponding region at the bottom of the shell are the non-protrusion corresponding regions, that is, the regions on two sides of the protrusion corresponding region are the non-protrusion corresponding regions. The explosion-proof valve can be disposed in either one or two of the non-protrusion corresponding regions, achieving deviation of the explosion-proof valve with respect to the protrusion, thus avoiding unsmooth gas discharge caused by the explosion-proof valve being blocked by the protrusion when the cell undergoes thermal runaway. This allows for smooth gas discharge, and avoids explosion caused by unsmooth gas discharge during thermal runaway of the cell, thus reducing the safety hazard.

In some embodiments, the shell is provided with the explosion-proof valve in at least one of the non-protrusion corresponding regions.

With the foregoing technical solution, the explosion-proof valve can be disposed in at least one of the non-protrusion corresponding regions, such that the explosion-proof valve in at least one of the non-protrusion corresponding regions can release gas during thermal runaway of the cell, thus ensuring smooth gas discharge, avoiding danger, and further improving the safety.

In some embodiments, the shell is provided with the explosion-proof valve in each of the two non-protrusion corresponding regions.

With the foregoing technical solution, the explosion-proof valve is disposed in each of the two non-protrusion corresponding regions, that is, at least two explosion-proof valves are provided, such that gas can be released at the at least two explosion-proof valves during thermal runaway of the cell, improving the gas discharge efficiency and speed, and further improving the safety. In addition, the explosion-proof valve being disposed in each of the two non-protrusion corresponding regions allows for gas discharge at different positions of the battery housing during thermal runaway of the cell, such that gas can be discharged outward from the nearby explosion-proof valve, improving the gas discharge speed and effect, and further reducing the danger.

In some embodiments, the shell is provided with multiple such explosion-proof valves in the non-protrusion corresponding regions.

With the foregoing technical solution, multiple explosion-proof valves can be disposed in each non-protrusion corresponding region, thus improving the gas discharge effect and efficiency and further improving the safety.

In some embodiments, the explosion-proof valves in the two non-protrusion corresponding regions are symmetrical to each other.

With the foregoing technical solution, the two symmetrically disposed explosion-proof valves can avoid unsmooth gas discharge caused by deviation of the explosion-proof valves, improving the gas discharge effect and efficiency and further reducing the possibility of cell explosion caused by thermal runaway, thus improving the safety. In addition, the two symmetrically disposed explosion-proof valves make the appearance of the battery housing more aesthetic and tidy.

In some embodiments, the explosion-proof valve is an indentation explosion-proof valve or a welded explosion-proof valve.

With the foregoing technical solution, the indentation explosion-proof valve refers to an explosion-proof valve formed through indenting on the shell, making the position of the shell with the indentation thinner than other positions of the shell. In this way, during thermal runaway of the cell, the gas produced by the thermal runaway can break through the indentation explosion-proof valve for gas discharge when the pressure reaches a specified value, thus avoiding safety problems caused by the thermal runaway. The welded explosion-proof valve refers to an explosion-proof valve formed on the shell through welding, making the welding position on the shell thinner than other positions of the shell. In this way, during thermal runaway of the cell, when the pressure reaches a specified value, the gas produced by the thermal runaway can break through the welded explosion-proof valve for gas discharge, thus avoiding safety problems caused by the thermal runaway.

According to a second aspect, this application provides a battery cell including the battery housing in the foregoing embodiment and a cell, the cell being disposed in the shell of the battery housing.

The battery cell provided in this embodiment of this application has the following beneficial effect: The battery cell provided in this embodiment of this application uses the battery housing in the foregoing embodiment, effectively improving the safety of the battery cell.

According to a third aspect, this application provides a battery including a bottom plate and the battery cell in the foregoing embodiment. Multiple such battery cells are arranged in sequence, the bottom plate is fixedly disposed at bottoms of the multiple battery cells, and a protrusion of the bottom plate is opposite the protrusion corresponding region of the battery housing of the battery cell.

The battery provided in this embodiment of this application has the following beneficial effect: The battery provided in this embodiment of this application uses the battery cell in the foregoing embodiment, effectively improving the safety of the battery.

According to a fourth aspect, this application provides an electric device including the battery in the foregoing embodiment, where the battery is configured to supply electrical energy.

The electric device provided in this embodiment of this application has the following beneficial effect: The electric device provided in this embodiment of this application uses the battery in the foregoing embodiment, effectively improving the safety of the electric device.

The foregoing description is merely an overview of the technical solution of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments or illustrative art. Apparently, the accompanying drawings in the following description show merely some embodiments of this application, and persons of ordinary skill in the art may still derive other drawings from these accompanying drawings without creative efforts.
FIG. 1 is a schematic structural diagram of an inverted battery housing including a welded explosion-proof valve according to some embodiments of this application;
FIG. 2 is a schematic structural diagram of an inverted battery housing including an indentation explosion-proof valve according to some embodiments of this application;
FIG. 3 is a first schematic structural exploded view of a battery according to some embodiments of this application;
FIG. 4 is a second schematic structural exploded view of a battery according to some embodiments of this application;
FIG. 5 is a top view of a battery according to some embodiments of this application; and
FIG. 6 is a cross-sectional view of a battery shown in FIG. 5 along A-A.

Reference signs in specific embodiments are as follows:
1. battery housing; 11. shell; 111. protrusion corresponding region; 112. non-protrusion corresponding region; 12. explosion-proof valve;
2. cell;
3. battery cell;
4. bottom plate; 41. protrusion; and
100. battery.

### DETAILED DESCRIPTION OF EMBODIMENTS

To make the objectives, technical solutions, and advantages of this application more comprehensible, the following describes this application in detail with reference to embodiments and accompanying drawings. It should be understood that the specific embodiments described herein are merely used to explain this application but are not intended to limit this application.

It should be noted that when a component is referred to as being "fastened to" or "provided on" another component, it may be directly or indirectly on the another component. When a component is referred to as being "connected to" another component, it may be directly or indirectly connected to the another component. The orientations or positional relationships indicated by the terms "above", "below", "left", "right" and the like are based on the orientations or positional relationships shown in the accompanying drawings. Such terms are intended merely for the ease and brevity of description of this application without indicating or implying that the apparatuses or components mentioned in this application must have specified orientations or must be constructed and operated in the specified orientations, and therefore shall not be construed as any limitations on this application. Persons of ordinary skill in the art can understand specific meanings of these terms in specific situations. Terms "first", "second", "third", "fourth", and "fifth" are merely for the purpose of description, and shall not be understood as any indication or implication of relative importance or any implicit indication of the number of technical features. "Multiple" means at least two unless otherwise specifically stated.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The inventor has noticed that with the wide application of the battery, people pay more attention to the safety of the battery. When the cell undergoes thermal runaway and the pressure in the cell exceeds a specified value, it is necessary to discharge the gas in the cell, so as to avoid cell explosion. Therefore, the explosion-proof valve needs to be disposed on the battery housing, such that when the pressure in the cell reaches a specified value, the gas breaks through the explosion-proof valve, causing the explosion-proof valve to open for gas discharge, thus avoiding cell explosion. However, because a protrusion is disposed in the middle region of the bottom plate of the battery and the protrusion corresponds to the explosion-proof valve in position, that is, the protrusion obstructs the explosion-proof valve, the explosion-proof valve is prevented from discharging gas. Such unsmooth gas discharge will lead to cell explosion during thermal runaway, causing safety hazard.

To avoid cell explosion caused by unsmooth gas discharge during thermal runaway, the inventors have found through research that the explosion-proof valve can be staggered with the protrusion of the bottom plate of the battery, preventing the explosion-proof valve from being obstructed by the bottom plate of the battery, thus avoiding cell explosion caused by unsmooth gas discharge of the explosion-proof valve during thermal runaway of the cell.

Based on the foregoing considerations, to resolve the cell explosion problem caused by unsmooth gas discharge during thermal runaway, the inventors have designed a battery housing through in-depth research. The bottom of a shell of the battery housing is divided into a protrusion corresponding region and non-protrusion corresponding regions. The protrusion corresponding region corresponds to a protrusion of a bottom plate of the battery, the non-protrusion corresponding regions are staggered with the protrusion of the bottom plate of the battery, and an explosion-proof valve is disposed in the non-protrusion corresponding region. This ensures that the explosion-proof valve is not obstructed by the protrusion of the bottom plate of the battery, avoiding unsmooth gas discharge caused by the explosion-proof valve being obstructed, thus avoiding cell explosion.

In such battery housing, when the cell undergoes thermal runaway and the pressure in the cell reaches a specified value, the gas breaks through the explosion-proof valve, causing the explosion-proof valve to open. Because the explosion-proof valve is disposed in the non-protrusion corresponding region of the shell, the explosion-proof valve is not obstructed by the protrusion of the bottom plate of the battery. After the explosion-proof valve is opened, the gas can be smoothly discharged outward, avoiding cell explosion and improving the safety.

The battery cell disclosed in the embodiments of this application may be used without limitation in electric devices such as vehicles, ships, or aircrafts. The battery housing, the battery cell, the battery, and the like disclosed in this application may be used to constitute a power supply system of that electric device. This allows the gas to break through the explosion-proof valve for gas discharge during thermal runaway of the cell, avoiding explosion and improving the safety.

An embodiment of this application provides an electric device that uses a battery as a power source. The electric device may be but is not limited to a mobile phone, a tablet, a laptop computer, an electric toy, an electric tool, an electric bicycle, an electric vehicle, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

A battery housing 1 provided in the embodiments of this application is described with reference to the accompanying drawings.

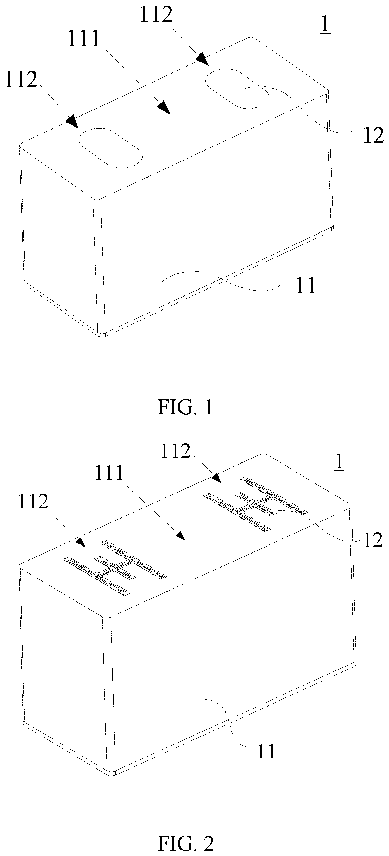

Refer to FIGs. 1 and 2. FIG. 1 is a schematic structural diagram of the battery housing 1 according to some embodiments of this application. FIG. 2 is a schematic structural diagram of the battery housing 1 according to some other embodiments of this application. The battery housing 1 includes a shell 11 and an explosion-proof valve 12. The shell 11 has an accommodating space for accommodating a cell 2, the bottom of the shell 11 is divided into a protrusion corresponding region 111 and non-protrusion corresponding regions 112, and the explosion-proof valve 12 is disposed in the non-protrusion corresponding region.

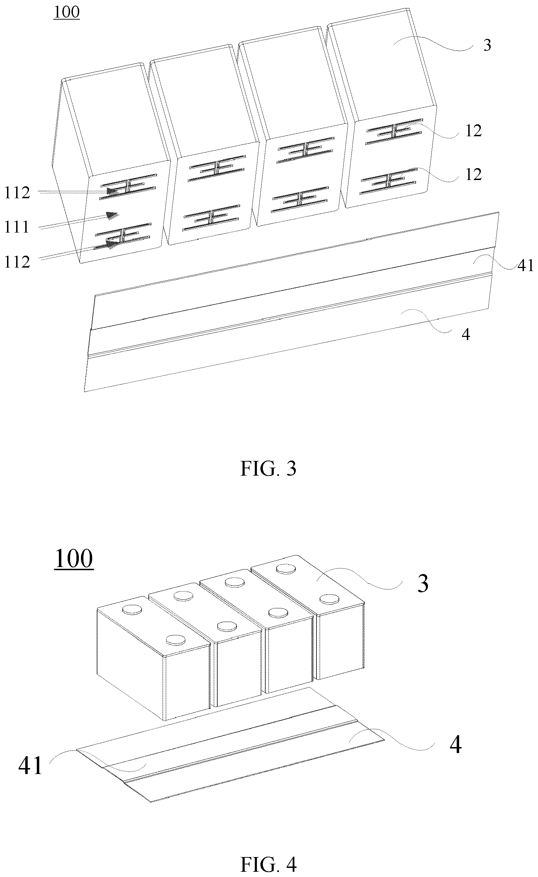

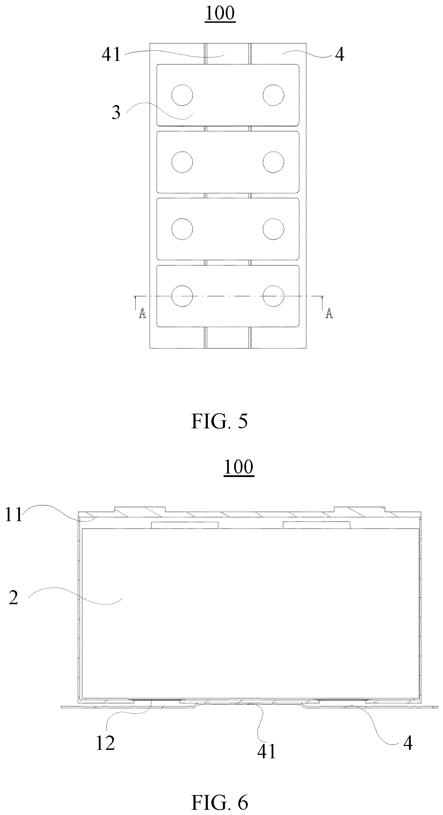

Refer to FIGs. 3 to 6. FIGs. 3 and 4 are schematic structural diagrams of a battery 100 according to some embodiments of this application. The battery 100 includes multiple battery cells 3, where the battery cell 3 is a smallest element constituting the battery 100. The battery cell 3 includes an end cover, a battery housing 1, a cell 2, and other functional components.

The end cover refers to a component that covers an opening of the battery housing 1 to isolate an internal environment of the battery cell 3 from an external environment. A shape of the end cover is not limited and may be adapted to a shape of the battery housing 1 to fit the battery housing 1. Optionally, the end cover may be made of materials with specified hardness and strength (for example, aluminum alloy), so that the end cover is less likely to deform under extrusion and collision, enabling the battery cell 3 to have a higher structural strength and enhanced safety performance.

The battery housing 1 is a component configured for forming the internal environment of the battery cell 3 together with the end cover, where the internal environment formed may be used to contain the cell 2, an electrolyte, and other components. The battery housing 1 and the end cover may be independent components, an opening may be provided in the battery housing 1, and the end cover covers the opening to form the internal environment of the battery cell 3. Without limitation, the end cover and the battery housing 1 may be alternatively integrated. The battery housing 1 may be of various shapes and sizes, such as a cuboid shape, a cylindrical shape, and a hexagonal prism shape. Specifically, a shape of the battery housing 1 may be determined according to a specific shape and size of the cell 2. The battery housing 1 may be made of various materials, such as copper, iron, aluminum, stainless steel, aluminum alloy, and plastic, which are not particularly limited in the embodiments of this application. The battery housing 1 includes a shell 11 and an explosion-proof valve 12, where the cell 2 is accommodated in the shell 11. A bottom of the shell 11 is disposed below the cell 2, and the bottom of the shell 11 has a protrusion corresponding region 111 and non-protrusion corresponding regions 112. The protrusion corresponding region 111 corresponds to a protrusion 41 of a bottom plate 4 of the battery 100, and the non-protrusion corresponding regions 112 do not correspond to the protrusion 41 of the bottom plate 4 of the battery 100. The explosion-proof valve 12 is disposed in the non-protrusion corresponding region 112 of the bottom of the shell 11. When the cell 2 undergoes thermal runaway and the pressure in the cell 2 reaches a specified value, the explosion-proof valve 12 is broken open. Because the explosion-proof valve 12 is not obstructed by the protrusion 41 of the bottom plate 4 of the battery 100, the gas can be smoothly discharged, avoiding explosion of the cell 2.

The cell 2 is a component in which electrochemical reactions take place in the battery cell 3. The cell 2, also known as electrode assembly, is mainly formed by winding or stacking a positive electrode plate and a negative electrode plate, and a separator is generally disposed between the positive electrode plate and the negative electrode plate. Parts of the positive electrode plate and the negative electrode plate that have active substances constitute a body portion of the cell 2, while parts of the positive electrode plate and the negative electrode plate that have no active substances separately constitute a tab. A positive electrode tab and a negative electrode tab may both be located at one end of the body portion or be located at two ends of the body portion respectively. During charge and discharge of the battery 100, a positive electrode active substance and a negative electrode active substance react with an electrolyte, and the tabs are connected to the electrode terminals to form a current loop.

Referring to FIGs. 3 to 5, the battery 100 includes the bottom plate 4 and multiple battery cells 3 arranged in sequence. The bottom plate 4 is disposed at bottoms of the multiple battery cells 3 arranged in sequence, and the protrusion 41 is disposed on the bottom plate 4. A region of the bottom of the shell 11 of the battery cell 3, which corresponds to the protrusion 41, is the protrusion corresponding region 111, and a region of the bottom of the shell 11 of the battery cell 3, which does not correspond to the protrusion 41, is the non-protrusion corresponding region 112.

In the battery 100, multiple battery cells 3 may be provided, and the multiple battery cells 3 may be connected in series, parallel, or series-parallel, where being connected in series-parallel means a combination of series and parallel connections of the multiple battery cells 3. The multiple battery cells 3 may be directly connected in series, parallel, or series and parallel. Certainly, the multiple battery cells 3 may be connected in series, parallel, or series and parallel to constitute a battery module, and then multiple such battery modules are connected in series, parallel, or series and parallel to constitute a whole as the battery 100. The battery 100 may further include other structures. For example, the battery 100 may further include a busbar configured to implement electrical connection between the multiple battery cells 3.

Each battery cell 3 may be a secondary battery or a primary battery, and may be a lithium-sulfur battery, a sodium-ion battery, or a magnesium-ion battery, without being limited thereto. The battery cell 3 may be cylindrical, straight, cuboid, or of other shapes.

According to some embodiments of this application, referring to FIGs. 1 to 3, this application provides a battery housing 1 including a shell 11 and an explosion-proof valve 12. A bottom of the shell 11 has a protrusion corresponding region 111 and non-protrusion corresponding regions 112. The protrusion corresponding region 111 is opposite a protrusion 41 of a bottom plate 4 of a battery 100, and the non-protrusion corresponding regions 112 and the protrusion 41 of the bottom plate 4 of the battery 100 are staggered with each other. The explosion-proof valve 12 is disposed in the non-protrusion corresponding region 112.

The shell 11 is an accommodating housing accommodating the cell 2 and includes a bottom and a side. The bottom is disposed below the cell 2, and the side is a structure enclosing the side wall of the cell 2. The bottom plate 4 of the battery 100 is also disposed below the battery housing 1, and the protrusion 41 is disposed on the bottom plate 4 of the battery 100. The bottom of the shell 11 has a partial region corresponding to the protrusion 41 of the bottom of the battery 100, and this region is the protrusion corresponding region 111. The region of the bottom of the shell 11, which does not correspond to the protrusion 41, is the non-protrusion corresponding region 112. The explosion-proof valve 12 is disposed in the non-protrusion corresponding region 112 of the bottom of the shell 11. The explosion-proof valve 12 is a thin-wall valve on the shell 11, and the explosion-proof valve 12 can be broken through when the shell 11 is subjected to pressure impact, thus achieving the purpose of discharging gas.

As the explosion-proof valve 12 is disposed in the non-protrusion corresponding region 112 of the bottom of the shell 11, when the cell 2 undergoes thermal runaway and the pressure in the cell 2 exceeds a specified value, the explosion-proof valve 12 is opened, and gas is discharged from the explosion-proof valve 12. With the explosion-proof valve 12 disposed in the non-protrusion corresponding region 112, the protrusion 41 of the bottom plate 4 of the battery 100 does not obstruct the explosion-proof valve 12, thus avoiding unsmooth gas discharge of the explosion-proof valve 12. This ensures that the gas in the battery cell 3 can be discharged smoothly, avoiding explosion of the cell 2, reducing safety hazard, and improving safety.

Referring to FIGs. 1 to 3, according to some embodiments of this application, the protrusion corresponding region 111 is provided in a middle region of the bottom of the shell 11, and the non-protrusion corresponding regions 112 are on two sides of the protrusion corresponding region 111.

The protrusion 41 on the bottom plate 4 of the battery 100 is disposed in a central region of the bottom plate 4, and the protrusion corresponding region 111 of the bottom of the shell 11 corresponding thereto is also arranged in the central region of the bottom of the shell 11, while the non-protrusion corresponding regions 112 are on two sides of the protrusion corresponding region 111 in the central region of the bottom of the shell 11. Certainly, when the protrusion 41 of the bottom of the battery 100 is disposed on the edge or in another region, the position of the protrusion corresponding region 111 of the bottom of the shell 11 corresponding thereto also changes, and accordingly, the positions of the regions of the bottom of the shell 11 other than the protrusion corresponding region 111 also change.

A middle region of the bottom of the shell 11 is the protrusion corresponding region 111, and the non-protrusion corresponding regions 112 are on two sides of the protrusion corresponding region 111 located in the middle region. The explosion-proof valve 12 may be disposed in either one or two of the non-protrusion corresponding regions on two sides of the protrusion corresponding region 111, achieving deviation of the explosion-proof valve 12 with respect to the protrusion 41, thus avoiding unsmooth gas discharge caused by the protrusion 41 obstructing the explosion-proof valve 12 during thermal runaway of the cell 2. This allows for smooth gas discharge, and avoids explosion of the cell 2 caused by unsmooth gas discharge during thermal runaway, thus reducing safety hazard.

According to some embodiments of this application, the shell 11 is provided with the explosion-proof valve 12 in at least one of the non-protrusion corresponding regions 112.

The protrusion corresponding region 111 is disposed in the middle region of the bottom of the shell 11, so the non-protrusion corresponding regions 112 are on two sides of the protrusion corresponding region 111. To prevent the explosion-proof valve 12 from being obstructed by the protrusion 41 of the bottom plate 4 of the battery 100, the explosion-proof valve 12 is disposed in the non-protrusion corresponding region 112. The explosion-proof valve 12 may be disposed in at least one of the non-protrusion corresponding regions 112.

With the foregoing technical solution, the explosion-proof valve 12 can be disposed in at least one of the non-protrusion corresponding regions 112, such that the explosion-proof valve 12 in at least one of the non-protrusion corresponding regions 112 is not obstructed by the protrusion 41 during thermal runaway of the cell 2. This ensures that gas can be discharged smoothly, avoiding unsmooth gas discharge, avoiding explosion caused by unsmooth gas discharge, reducing the danger, and further improving the safety.

Referring to FIGs. 1 to 3, according to some embodiments of this application, the shell 11 is provided with the explosion-proof valve 12 in each of the two non-protrusion corresponding regions 112.

The explosion-proof valve 12 is disposed in each of the two non-protrusion corresponding regions 112, meaning that at least two explosion-proof valves 12 are provided and spaced apart from each other.

The explosion-proof valve 12 is disposed in each of the two non-protrusion corresponding regions 112 and at least one explosion-proof valve 12 is disposed in each non-protrusion corresponding region 112, that is, at least two explosion-proof valves 12 are provided. In this way, when the cell 2 undergoes thermal runaway, gas can be discharged at the at least two explosion-proof valves 12, improving the degassing efficiency and speed and further improving the safety. In addition, the explosion-proof valve 12 being disposed in each of the two non-protrusion corresponding regions 112 allows for gas discharge at different positions of the battery housing 1 during thermal runaway of the cell 2, such that gas can be discharged outward from the nearby explosion-proof valve 12, improving the gas discharge speed and effect, and further reducing the danger.

According to some embodiments of this application, the shell 11 is provided with multiple explosion-proof valves 12 in the non-protrusion corresponding regions 112.

With the foregoing technical solution, multiple explosion-proof valves 12 can be disposed in each non-protrusion corresponding region 112, thus improving the gas discharge effect and efficiency and further improving the safety.

Referring to FIGs. 1 to 3, according to some embodiments of this application, the explosion-proof valves 12 in the two non-protrusion corresponding regions 112 are symmetrical to each other.

The explosion-proof valves 12 in the two non-protrusion corresponding regions 112 being symmetrical to each other means that the explosion-proof valves 12 in the two non-protrusion corresponding regions 112 are symmetrical with respect to the protrusion corresponding region 111.

Since the protrusion 41 of the bottom plate 4 of the battery 100 corresponds to the middle region of the bottom of the shell 11, the explosion-proof valve 12 is disposed in a non-middle region of the bottom of the shell 11. In this case, the explosion-proof valve 12 deviates with respect to the protrusion 41. The explosion-proof valves 12 in the two non-protrusion corresponding regions 112 being symmetrical allows for smooth gas discharge, thus avoiding unsmooth gas discharge caused by deviation of the explosion-proof valve 12. This improves the gas discharge effect and efficiency and further reduces the probability of explosion of the cell 2 caused by thermal runaway, thus improving the safety. In addition, the two explosion-proof valves 12 being symmetric makes the appearance of the battery housing 1 more aesthetic and tidy.

Referring to FIGs. 1 and 2, according to some embodiments of this application, the explosion-proof valve 12 is an indentation explosion-proof valve or a welded explosion-proof valve.

The indentation explosion-proof valve refers to an explosion-proof valve 12 formed through indenting on the shell 11. Accordingly, the position with the indentation of the shell 11 is thinner than other positions of the shell 11 and easier to be broken open under the impact of the gas pressure. The welded explosion-proof valve refers to an explosion-proof valve 12 formed through welding on the shell 11. Accordingly, the welding position on the shell 11 is thinner than other positions of the shell 11 and easier to be broken open under the impact of the gas pressure.

The explosion-proof valve 12 may be designed as an indentation explosion-proof valve or a welded explosion-proof valve. During thermal runaway of the cell 2, the gas produced by thermal runaway can break through the indentation explosion-proof valve or the welded explosion-proof valve for gas discharge, thus avoiding the safety problem caused by thermal runaway.

According to a second aspect, an embodiment of this application provides a battery cell 3. Referring to FIGs. 3 to 6, the battery cell 3 includes the battery housing 1 in the foregoing embodiments and a cell 2, the cell 2 being disposed in the shell 11 of the battery housing 1.

The battery cell 3 provided in this embodiment of this application uses the battery housing 1 in the foregoing embodiment, effectively improving the safety of the battery cell 3.

According to a third aspect, an embodiment of this application further provides a battery 100 including the battery cell 3 in any one of the foregoing technical solutions and a bottom plate 4. Multiple battery cells 3 are arranged in sequence, the bottom plate 4 is fixedly disposed at bottoms of the multiple battery cells 3, and a protrusion 41 of the bottom plate 4 is opposite the protrusion corresponding region 111 of the battery housing 1 of the battery cell 3.

The battery 100 provided in this embodiment of this application uses the battery cell 3 in the foregoing embodiment, effectively improving the safety of the battery 100.

According to a fourth aspect, an embodiment of this application further provides an electric device including the battery 100 in any one of the foregoing solutions, where the battery 100 is configured to supply electrical energy to the electric device.

The electric device may be any one of the above-mentioned devices or systems using the battery 100.

According to some embodiments of this application, referring to FIGs. 1 to 6, this application provides a battery housing 1. The battery housing 1 includes a shell 11 and an explosion-proof valve 12. A cell 2 is disposed in the shell 11, a protrusion corresponding region 111 opposite a protrusion 41 of a bottom plate 4 of the battery 100 is disposed in a middle region of a bottom of the shell 11, and two non-protrusion corresponding regions 112 are on two sides of the protrusion corresponding region 111 of the bottom of the shell 11. The shell 11 is provided with explosion-proof valves 12 in the two non-protrusion corresponding regions 112, and the explosion-proof valves 12 in the two non-protrusion corresponding regions 112 are symmetric, such that the protrusion 41 of the bottom plate 4 of the battery 100 does not obstruct the explosion-proof valves 12 and the protrusion 41 of the bottom plate 4 of the battery 100 does not affect the normal gas discharge of the explosion-proof valves 12. When the cell 2 undergoes thermal runaway and the pressure in the cell 2 exceeds a specified value, because the explosion-proof valves 12 are symmetric, the protrusion 41 on the bottom plate 4 of the battery 100 does not affect the gas discharge of the explosion-proof valves 12, thus avoiding the unsmooth gas discharge of the explosion-proof valves 12. This allows the gas in the battery 100 to be discharged smoothly, thus avoiding explosion of the cell 2, reducing the safety hazard, and improving the safety.

The foregoing descriptions are merely embodiments of this application and are not intended to limit this application. For persons skilled in the art, this application may have various changes and variations. Any modification, equivalent replacement, improvement, or the like made without departing from the spirit and principle of this application shall fall within the scope of claims of this application.

## Claims

1. A battery housing for battery cell, comprising:
a shell, wherein a bottom of the shell has a protrusion corresponding region and non-protrusion corresponding regions, the protrusion corresponding region is opposite a protrusion of a bottom plate of a battery, and the non-protrusion corresponding regions and the protrusion of the bottom plate of the battery are staggered with each other; and
an explosion-proof valve, wherein the explosion-proof valve is disposed in the non-protrusion corresponding region.

2. The battery housing according to claim 1, wherein the protrusion corresponding region is provided in a middle region of the bottom of the shell, and the non-protrusion corresponding regions are on two sides of the protrusion corresponding region.

3. The battery housing according to claim 2, wherein the shell is provided with the explosion-proof valve in at least one of the non-protrusion corresponding regions.

4. The battery housing according to claim 3, wherein the shell is provided with the explosion-proof valve in each of the two non-protrusion corresponding regions.

5. The battery housing according to claim 2, wherein the shell is provided with multiple such explosion-proof valves in the non-protrusion corresponding regions.

6. The battery housing according to claim 5, wherein the explosion-proof valves in the two non-protrusion corresponding regions are symmetrical to each other.

7. The battery housing according to any one of claims 1 to 6, wherein the explosion-proof valve is an indentation explosion-proof valve or a welded explosion-proof valve.

8. A battery cell, wherein the battery cell comprises the battery housing according to any one of claims 1 to 7; and
a cell, wherein the cell is disposed in the shell of the battery housing.

9. A battery, wherein the battery comprises:
multiple such battery cells according to claim 8, wherein the multiple battery cells are arranged in sequence; and
a bottom plate fixedly disposed at bottoms of the multiple battery cells, with a protrusion on the bottom plate being opposite the protrusion corresponding region of the battery housing of the battery cell.

10. An electric device, wherein the electric device comprises the battery according to claim 9.
